(19) Europäisches Patentamt
European Patent Office
Office européen des brevets

(11) **EP 4 576 804 A2**

(12) **EUROPEAN PATENT APPLICATION**

(43) Date of publication:
25.06.2025 Bulletin 2025/26

(21) Application number: 25156597.4

(22) Date of filing: 28.01.2021

(51) International Patent Classification (IPC):
*H04N 25/67* (2023.01)

(52) Cooperative Patent Classification (CPC):
**G06T 5/70; G02B 21/365; G06T 3/4015;
G06T 5/20; H04N 25/13; H04N 25/67;**
G06T 2207/10056; G06T 2207/10064;
G06T 2207/20012; G06T 2207/20032;
G06T 2207/30004

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2020 DE 102020102529**

(62) Document number(s) of the earlier application(s) in
accordance with Art. 76 EPC:
**21154120.6 / 3 859 656**

(71) Applicant: **Leica Instruments (Singapore) Pte Ltd.
Singapore 618299 (SG)**

(72) Inventor: **WARYCH, Stanislaw
9400 Rorschach (CH)**

(74) Representative: **2SPL Patentanwälte PartG mbB
Landaubogen 3
81373 München (DE)**

(54) **SYSTEM, METHOD AND COMPUTER PROGRAM FOR PROCESSING RAW IMAGE DATA OF A MICROSCOPE**

(57) Examples relate to a system (110), a method and a computer program for processing raw image data of a microscope, and to a corresponding microscope system (100). The system (110) comprises one or more processors (114) and one or more storage devices (116). The system (110) is configured to obtain the raw image data from an optical imaging sensor (122) of the micro-scope (120). The raw image data is based on a filter pattern of the optical imaging sensor. The system is configured to perform de-noising of the raw image data to obtain de-noised raw image data. The system is configured to perform filter pattern reconstruction using the de-noised raw image data to obtain reconstructed image data.

Fig. 1a

EP 4 576 804 A2

## Description

## Technical field

Examples relate to a system, a method and a computer program for processing raw image data of a microscope, and to a corresponding microscope system

## Background

Signal noise decreases the value of the information obtained from a sensor, such as an optical imaging sensor, which is available for the user. In optical imaging sensors, signal noise can occur due to multiple reasons, such as random electron motion due to heat, or due to sensor dust. Denoising refers to a method for addressing discovered sources of the noise in the signal to improve an overall signal to noise ratio. Signal denoising is a very wide field by itself and generic approaches are known that deal with signal noise.

Microscopes, as an optical system, have its own specific sources of noise. Other approaches might not account for denoising images originating from microscopes.

## Summary

There may be a desire for providing a concept for denoising image data of a microscope.

This desire is addressed by the subject-matter of the independent claims.

In many optical imaging sensors, such as optical imaging sensors of microscopes, sensors are being used that use a filter pattern to reduce the number of pixels required for implementing the optical imaging sensor. For example, the optical imaging sensor may have sensor pixels that sense light in different wavelength bands. Based on the wavelength band the respective sensor pixels sense, the sensor pixels may be assigned to a group of sensor pixels, with each group comprising sensor pixels that sense light in a specific wavelength band. Light in that wavelength band that is incident to other sensor pixels (not part of the group) may be sensed by interpolating the sensor values of sensor pixels of the group that are located adjacent to the respective sensor pixel. This is done in a process that is denoted "filter pattern reconstruction", which refers to the pattern of the filter that is being used to make the respective sensor pixels sense light in the different wavelength bands. Embodiments are based on the finding, that, in order to improve the de-noising of image data of a microscope, the de-noising may be performed before filter pattern reconstruction, in order to limit the influence of noise to a specific pixel, instead of spreading the noise to multiple pixels during the reconstruction.

Embodiments of the present disclosure provide a system for processing raw image data of a microscope. The system comprises one or more processors and one or more storage devices. The system is configured to obtain the raw image data from an optical imaging sensor of the microscope. The raw image data is based on a filter pattern of the optical imaging sensor. The system is configured to perform de-noising of the raw image data to obtain de-noised raw image data. The system is configured to perform filter pattern reconstruction using the de-noised raw image data to obtain reconstructed image data. By performing the filter pattern reconstruction based on the de-noised data, a spreading of the noise to multiple pixels may be avoided.

In embodiments, the de-noising of the raw image data may be performed before the filter pattern reconstruction. Thus, a spreading of the noise to multiple pixels may be avoided.

For example, the raw image data may be based on a plurality of pixels. The plurality of pixels may represent light in two or more wavelength bands, such that the raw image data comprises, for each pixel, an intensity value representing an intensity of light in one of the two or more wavelength bands. The de-noising may be performed separately in at least one of the two or more wavelength bands, e.g. for each of the two or more wavelength bands, based on the intensity values of the pixels of the respective wavelength band. This way, de-noising may be performed separately, or exclusively, for wavelength bands being used for fluorescence imaging, without accounting for noise of the other wavelength bands.

In various embodiments, performing the de-noising comprises applying a median filter to de-noise the raw image data. A median filter may be used to reduce the influence of outliers (and thus noise) in the raw image data.

As pointed out before, the raw image data may be based on a plurality of pixels. The plurality of pixels may represent light in two or more wavelength bands, such that the raw image data comprises, for each pixel, an intensity value representing an intensity of light in one of the two or more wavelength bands. Applying the median filter may comprise, for each pixel of the plurality of pixels, calculating a median value of the intensity of the light represented by the pixel and the intensity of light of one or more adjacent pixels representing light in the same wavelength band as the pixel, and using the median value for a corresponding pixel of the de-noised raw image data. This may implement a filter pattern-specific denoising of the raw image data using a median filter.

Alternatively, performing the de-noising may comprise applying an averaging filter to de-noise the raw image data. Averaging may be used in some embodiments instead of a median filter.

In various embodiments, the raw image data may be based on a plurality of pixels. The raw image data may comprise, for each pixel, an intensity value representing an intensity of light. Performing the de-noising may comprise comparing the intensity value of a pixel of the plurality of pixels to a pixel-specific intensity threshold, and adapting the intensity value of the pixel if the intensity is at most the pixel-specific threshold. This may suppress background noise that is due to the construction of the microscope.

For example, the intensity value may be compared after applying an averaging or median filter to de-noise the raw image data. In this order, an effectiveness of the de-noising may be improved.

For example, the intensity value of the pixel may be discarded if the intensity is at most the pixel-specific threshold. This may enable the use of a pixel-specific background value for background noise suppression.

In various embodiments, the pixel-specific threshold is based on an optical imaging sensor-specific pattern of noise. Thus, the de-noising may be used to suppress background noise that is due to the construction of the microscope, based on a pattern that is specific at least to the type of microscope.

For example, the optical imaging sensor-specific pattern of noise may be a generic pattern that is suitable for optical imaging sensors of different microscopes of the same type of microscope. In this case, a suitable pattern may be provided without requiring measurements within the specific microscope it is being used in.

Alternatively, the optical imaging sensor-specific pattern of noise may be a pattern that is generated using the optical imaging sensor of the microscope. Such a pattern may be more effective for the specific microscope but may require additional measurements. For example, the optical imaging sensor-specific pattern of noise may be a pattern that is generated during factory calibration of the optical imaging sensor.

Accordingly, the system may be configured to generate the optical imaging sensor-specific pattern of noise using the optical imaging sensor. Thus, the optical imaging sensor-specific pattern of noise may be generated by the system.

In various embodiments, the de-noising is performed for raw image data of fluorescence images. Fluorescence images may be susceptible to noise, as the light intensity is typically lower than in reflectance images.

For example, the filter pattern is a Bayer pattern. The system may be configured to perform Bayer reconstruction using the de-noised raw image data. Bayer patterns are often used in optical imaging sensors of microscopes.

Embodiments of the present disclosure further provide a microscope system comprising the above system and a microscope.

Embodiments of the present disclosure further provide a method for processing raw image data of a microscope. The method comprises obtaining the raw image data from an optical imaging sensor of the microscope. The raw image data is based on a filter pattern of the optical imaging sensor. The method comprises performing de-noising of the raw image data to obtain de-noised raw image data. The method comprises performing filter pattern reconstruction using the de-noised raw image data to obtain reconstructed image data.

Embodiments of the present disclosure provide a computer program with a program code for performing the method when the computer program is executed on a processor.

## Short description of the Figures

Some examples of apparatuses and/or methods will be described in the following by way of example only, and with reference to the accompanying figures, in which

Fig. 1a shows a block diagram of a system for processing raw image data of a microscope;

Fig. 1b shows a block diagram of a microscope system comprising a microscope and a system for processing raw image data of a microscope;

Fig. 2 shows a flow chart of a method for processing raw image data of a microscope;

Fig. 3a shows an illustrative diagram of a filter pattern;

Figs. 3b to 3h show various diagrams of a practical example of an application of the proposed concept; and

Fig. 4 shows a diagram of a microscope system.

## Detailed Description

Various examples will now be described more fully with reference to the accompanying drawings in which some examples are illustrated. In the figures, the thicknesses of lines, layers and/or regions may be exaggerated for clarity.

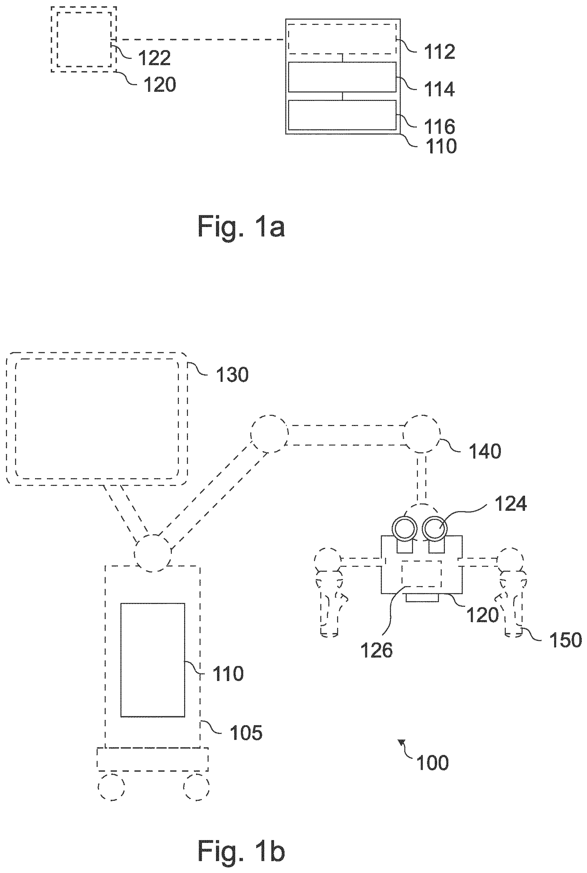

Fig. 1a shows a block diagram of a system 110 for processing raw image data of a microscope. The system comprises one or more processors 114 and one or more storage devices 116. Optionally, as further shown in Fig. 1a, the system may further comprise an interface 112. The one or more processors 114 are coupled to the one or more storage devices and to the interface 112. In general, the one or more processors 114 are configured to perform the respective actions of the system, e.g. in conjunction with the one or more storage devices 116 and/or the interface 112. The system is configured to obtain the raw image data from an optical imaging sensor 122 of the microscope. The raw image data is based on a filter pattern of the optical imaging sensor. The system is configured to perform de-noising of the raw image data to obtain de-noised raw image data. The system is configured to perform filter pattern reconstruction using the de-noised raw image data to obtain reconstructed image data.

Fig. 1b shows a block diagram of a microscope system comprising the microscope 120 and the system 110 for processing raw image data of a microscope. The microscope system shown in Fig. 1b is a surgical microscope system, which may be used at a surgical site by a surgeon. The surgical microscope system shown in Fig. 1b comprises a number of optional components, such as a base unit 105 (comprising the system 110) with a (rolling) stand, an auxiliary display 130, a (robotic or manual) arm 140 which holds the microscope 120 in place, and which is coupled to the base unit 105 and to the microscope 120, and steering handles 150 that are attached to the microscope 120. In addition to the optical imaging sensor 122, the microscope 120 may comprise optional ocular displays 124 and an optional auxiliary display 126. In the context of this application, the term "(surgical) microscope system" is used, in order to cover the portions of the system that are not part of the actual microscope (which comprises optical components), but which are used in conjunction with the microscope, such as the display or a lighting system.

Embodiments of the present disclosure relate to a system, method and computer program for processing raw image data of a microscope 120. In general, a microscope is an optical instrument that is suitable for examining objects that are too small to be examined by the human eye (alone). For example, a microscope may provide an optical magnification of an object. In modern microscopes, the optical magnification is often provided for a camera or an imaging sensor, such as the optical imaging sensor of the microscope 120 of Fig. 1a. The microscope 120 may further comprise one or more optical magnification components that are used to magnify a view on the sample.

There are a variety of different types of microscopes. If the microscope system is used in the medical or biological fields, the object being viewed through the microscope may be a sample of organic tissue, e.g. arranged within a petri dish or present in a part of a body of a patient. For example, the microscope system 100 may be a microscope system for use in a laboratory, e.g. a microscope that may be used to examine the sample of organic tissue in a petri dish.

Alternatively, the microscope 120 may be part of a surgical microscope system 100, e.g. a microscope to be used during a surgical procedure. Such a system is shown in Fig. 1b, for example. Although embodiments are described in connection with a microscope system, they may also be applied, in a more general manner, to any optical device. For example, the microscope system may be a system for performing material testing or integrity testing of materials, e.g. of metals or composite materials.

The system is suitable for, or configured to, processing/process raw image data of the microscope 120, more particular raw image data of the optical imaging sensor 122. In general, optical imaging sensors may be suitable for providing two types of image data - raw image data and processed image data. In general, the raw image data may be image data that has not been subject to additional image processing by the optical imaging sensor or by a processor, except for the analog-to-digital conversion being performed to determine the intensity of light incident to the respective sensor pixels of the optical imaging sensor. In particular, the raw image data may be image data that filter pattern reconstruction has not (yet) been applied on. The raw image data is based on a filter pattern of the optical imaging sensor. For example, the raw image data may be based on a plurality of pixels (e.g. a two-dimensional array of pixels). The plurality of pixels may represent light in two or more wavelength bands, such that the raw image data comprises, for each pixel, an intensity value representing an intensity of light in (only/exactly) one of the two or more wavelength bands. This may be due to the construction of the optical imaging sensor: The plurality of pixels may correspond to a plurality of sensor pixels of the optical imaging sensors. Each of the sensor pixels may be influenced by an optical (bandpass) filter that admits light (only) in a specific wavelength band, e.g. a "red", "green" or "blue" wavelength band. Consequently, the respective sensor pixel might only sense light in the wavelength band admitted by the respective optical filter, and an output of the sensor pixel may represent an intensity of the light sensed by the sensor pixel. For example, in optical imaging sensors, the two or more wavelength bands may comprise a "red" wavelength band (i.e. a portion of the wavelength spectrum comprising red light), a "green" wavelength band (i.e. a portion of the wavelength spectrum comprising green light) and a "blue" wavelength band (i.e. a portion of the wavelength spectrum comprising blue light). In this example, the raw image data comprises, for each pixel, an intensity value representing an intensity of light in (only/exactly) one of the red, green and blue wavelength band. In other words, the raw image data may be image data that contains, for each pixel of the image data, only an intensity value for a single wavelength band (and not for three wavelength bands, such as Red/Green/Blue).

The system is configured to obtain the raw image data from the optical imaging sensor 122 of the microscope. For example, the optical imaging sensor 122 may comprise or be an APS (Active Pixel Sensor) - or a CCD (Charge-Coupled-Device)-based imaging sensor. For example, in APS-based imaging sensors, light is recorded at each pixel using a photodetector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensor modules by a control circuitry of the sensor imaging module to perform the imaging. The raw image data may be obtained by receiving the raw image data from the optical imaging sensor (e.g. via the interface 112), by reading the raw image data out from a memory of the optical imaging sensor (e.g. via the interface 112), or by reading the raw image data from a storage device 116 of the system 110, e.g. after the raw image data has been written to the storage device 116 by the optical imaging sensor or by another system or processor.

The system is configured to perform de-noising of the raw image data to obtain de-noised raw image data. De-noising, or noise reduction, refers to a process suitable for reducing an amount of sensor noise in sensor data, e.g. in the image data provided by the optical imaging system. In optical systems, the noise often originates from random electron motion due to thermal agitation (i.e. in heated optical imaging sensors), from dust or from light or heat leakage within the optical system (i.e. the microscope). It often manifests itself as Salt-and-Pepper noise (noise that produces outliers in an otherwise homogenic environment) or as Gaussian noise (noise that effects a larger number of sensor pixels by a small amount). In embodiments, de-noising may be performed for salt-and-pepper type noise (i.e. to eliminate outliers affecting individual sensor pixels in the raw image data). In general, one or multiple de-noising actions may be taken.

In general, in image data from a microscope, de-noising is mostly desired in case fluorescence imaging is used. In general, during surgery, a bright (white) light is being used both for reflectance imaging and also so the surgeon or an assistant can clearly make out the features of the surgical site when the microscope is not being used, e.g. to detect bleeding outside the field of view. In fluorescence imaging, however, the fluorescence emissions being recorded by the optical imaging sensor are typically dim, such that a higher degree of amplification is required, which introduces or amplifies noise as well. However, in fluorescence imaging, only one or two wavelength bands may be of interest. Furthermore, the light recorded in these wavelength bands may show no correlation, as the fluorescence emissions are limited to narrow wavelength bands. Furthermore, in fluorescence imaging, light outside the fluorescence emission wavelength bands may be recorded separately, e.g. to use as white-light background, on which the fluorescence recording is overlaid as a pseudo-color image. In various examples, the de-noising may be performed separately in at least one of the two or more wavelength bands, e.g. for each of the two or more wavelength bands, based on the intensity values of the pixels of the respective wavelength band. For example, the at least one of the two or more wavelength bands may be tuned to, e.g. coincide with, a fluorescence emission wavelength band of a fluorophore. This way, the de-noising may be performed (only and) separately for the wavelength band or bands being used for fluorescence imaging. As each wavelength band is being treated separately, the de-noising may also be performed based on the intensity values alone, without reference to a color they represent. For example, the de-noising may be performed (directly) on the intensity values of the pixels. For example, the de-noising may be performed without mapping the intensity values into a color space, or without converting between different color spaces.

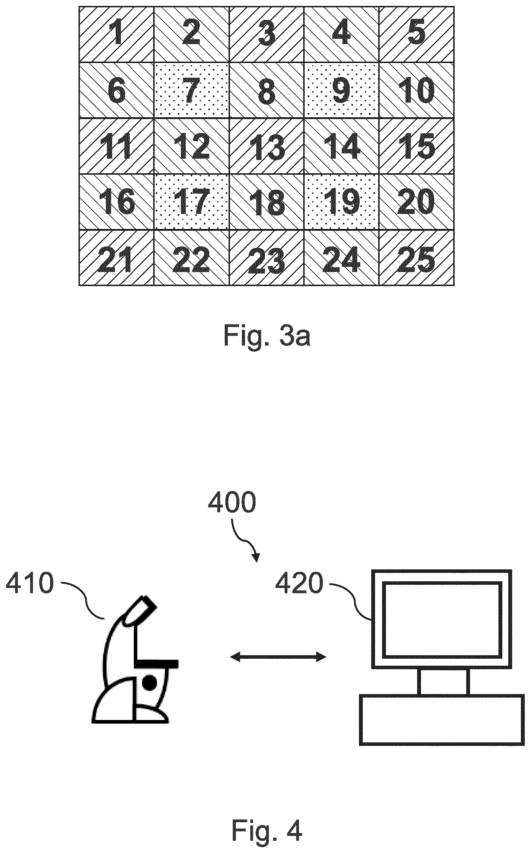

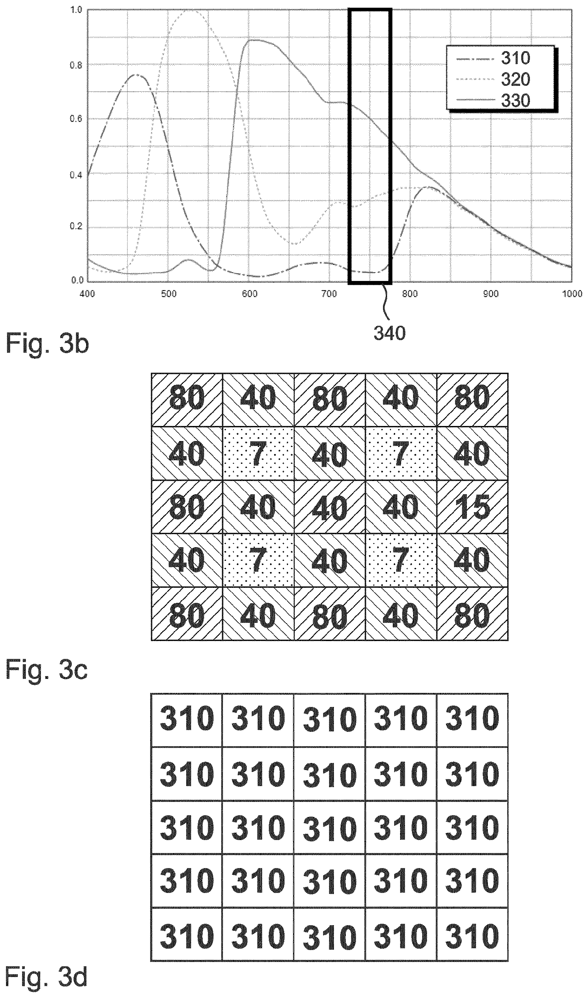

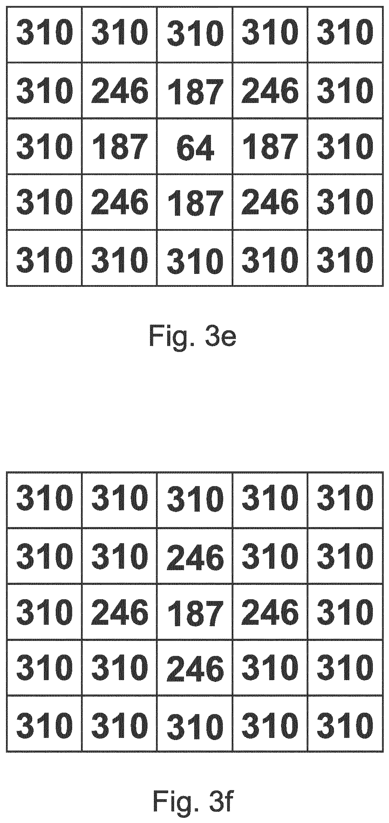

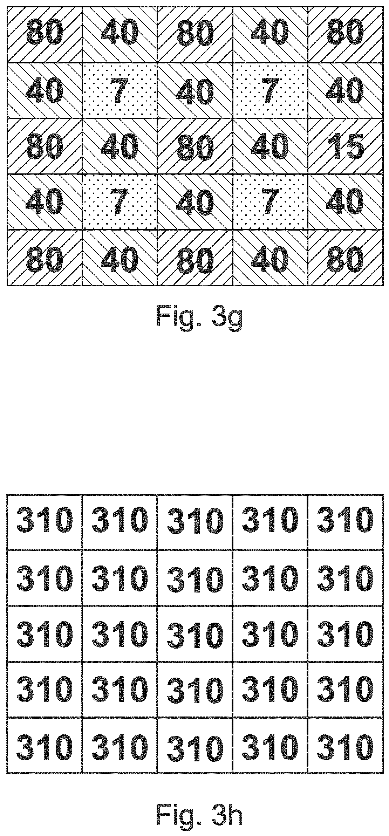

In various embodiments, a median filter or an averaging filter may be used for de-noising. In other words, performing the de-noising may comprise applying a median filter to de-noise the raw image data. Alternatively, performing the de-noising comprises applying an averaging filter to de-noise the raw image data. In both cases, the course of action is similar - for each pixel, a plurality of adjacent pixels that sense light in the same wavelength band are evaluated, and either a median or an average value (for the intensity of light) is calculated based on the values of the pixel and of the adjacent pixels. To put it more formally: The raw image data may comprise, for each pixel, an intensity value representing an intensity of light in (exactly) one of the two or more wavelength bands. Applying the median filter may comprise, for each pixel of the plurality of pixels, calculating a median value of the intensity of the light represented by the pixel and the intensity of light of one or more adjacent pixels, the one or more adjacent pixels representing light in the same wavelength band as the pixel, and using the median value for a corresponding pixel of the de-noised raw image data. Correspondingly, applying the averaging filter may comprise, for each pixel of the plurality of pixels, calculating an average value of the intensity of the light represented by the pixel and the intensity of light of one or more adjacent pixels, the one or more adjacent pixels representing light in the same wavelength band as the pixel, and using the average value for a corresponding pixel of the de-noised raw image data. In both cases, the adjacent pixels being considered represent light in the same wavelength band as the pixel for which the de-noising is being performed. The one or more adjacent pixels may at least partially surround the pixel. For example, each of the two or more adjacent pixels may have (substantially) the same distance from the pixel the de-noising is being performed on. For example, as shown in Fig. 3, the pixels may be arranged in a filter pattern according to the wavelength band they sense. Fig. 3 shows a portion of a Bayer pattern being used in optical imaging sensors. In this pattern, each pixel has four adjacent pixels sensing light in the same wavelength band (at least for pixels removed from the edges of the optical imaging sensors), which are located once removed in every dimension in a diagonal manner for red and green, and twice removed in a non-diagonal manner for blue. In other words, "adjacent" pixels need not be directly adjacent to the pixel the de-noising is performed on, but can be removed by at least one further pixel, or be adjacent in a diagonal manner. At the same time, adjacent pixels might not be removed by more than e.g. three pixels in any dimension. The de-noising of the raw image data may comprise iterating over (all of) the plurality of pixels to (individually) de-noise each pixel of the plurality of pixels. Close to the edges of the optical imaging sensor, fewer adjacent pixels might be used.

The above methodology applies both to the Bayer pattern depicted in Fig. 3, and to other patterns that might also be used with embodiments. Accordingly, the filter pattern may be a Bayer pattern, or another pattern, such as a RGEB (Red, Green, Emerald, Blue) pattern, or a modified Bayer pattern having different sizes for the filters, such as an XTrans filter pattern used by Fujifilm.

In some embodiments, additional de-noising actions might be taken. For example, de-noising may be performed that addresses known sources of noise. In optical systems, due to light leaking within the optical system, or due to heat being distributed heterogeneously within the system, background noise may be present in the raw image data that is due to the intrinsic properties (i.e. the construction) of the optical imaging system. Such noise may be removed by generating an optical imaging sensor-specific pattern of noise, and using that pattern to suppress light intensity values that are likely caused by the background noise. In more formal terms, the raw image data may be based on a plurality of pixels. The raw image data may comprise, for each pixel, an intensity value representing an intensity of light (of light in any wavelength band). Performing the de-noising may comprise comparing the intensity value of a pixel of the plurality of pixels to a pixel-specific intensity threshold, and adapting (e.g. suppressing, adjusting or discarding) the intensity value of the pixel if the intensity is at most the pixel-specific threshold. The intensity value may be compared after (or alternatively before) applying an averaging or median filter to de-noise the raw image data. For example, the intensity value of the pixel may be discarded/suppressed if the intensity is at most the pixel-specific threshold. In other words, the intensity value of a pixel may be adjusted if the pixel-specific intensity threshold indicates that the pixel has (primarily or only) sensed background noise. The determination, whether this is the case, is performed on a pixel-specific level. In this context, the term pixel-specific intensity threshold may be understood as an intensity threshold that is defined for the pixel. In some embodiments, the intensity threshold may be defined for groups of pixels (e.g. a group of six pixels of a cell of the Bayer pattern, or a group of 2x2 pixels etc.). In some embodiments, however, the intensity threshold may be defined individually for every single pixel of the plurality of pixels.

In some embodiments, an intensity threshold may be defined by an optical imaging sensor-specific threshold map/array, which may be based on the background noise of the optical imaging sensor (within the microscope). In other words, the pixel-specific threshold may be based on an optical imaging sensor-specific pattern of noise. The optical imaging sensor-specific pattern of noise may represent, or be based on, a background noise that the optical imaging sensor perceives during its operation, e.g. once the system has warmed up. The optical imaging sensor-specific pattern of noise may comprise an array/a matrix of intensity threshold values for the plurality of pixels. This array/matrix of intensity threshold values may represent, or be based on, the background noise that the optical imaging sensor perceives during its operation.

Different types of optical imaging sensor-specific patterns of noise may be used for de-noising the raw image data. For example, in a more generic embodiment, an optical imaging sensor-specific pattern of noise might be used that is suitable/applicable for the type of microscope, i.e. that can be used for different microscopes of the same type. In other words, the optical imaging sensor-specific pattern of noise may be a generic pattern that is suitable for optical imaging sensors of different microscopes of the same type of microscope. In this context, the term "generic pattern" indicates, that the optical imaging sensor-specific pattern of noise is suitable for more than one optical imaging sensor. In other words, the optical imaging sensor-specific pattern of noise might not be specific to the very microscope it is being used it, but to the type of microscope of the microscope it is being used in.

Alternatively, optical imaging sensor-specific pattern of noise may be used that is specific to the very microscope and optical imaging sensor it is being used in. In such cases, the optical imaging sensor-specific pattern of noise may be generated using the optical imaging sensor of the microscope. In other words, the optical imaging sensor-specific pattern of noise may be a pattern that is generated using the optical imaging sensor of the microscope. Accordingly, the optical imaging sensor-specific pattern of noise may be specific to, or calibrated for, the optical imaging sensor of the microscope. Accordingly, the optical imaging sensor-specific pattern of noise might be suitable for/tailored to a single microscope/optical imaging sensor. For example, the optical imaging sensor-specific pattern of noise may be a pattern that is generated during factory calibration of the optical imaging sensor. The optical imaging sensor-specific pattern of noise may be generated by a calibration apparatus that is external to the microscope system 100 (e.g. a calibration apparatus that is part of the assembly line for manufacturing the microscope system), or by the system 110. Accordingly, the system is configured to generate the optical imaging sensor-specific pattern of noise using the optical imaging sensor, e.g. during factory calibration, or during a later calibration. During the generation of the optical imaging sensor-specific pattern of noise, the illumination sources of the microscope system may be disabled, and ambient light might be avoided. Additionally, the system may be in operation for some time (e.g. an hour) before the generation of the optical imaging sensor-specific pattern of noise, to make sure heat has spread through the microscope in a realistic manner. Once the microscope has reached realistic heat distribution, the optical imaging sensor-specific pattern of noise may be generated from raw image data of the optical imaging sensor, with the optical imaging sensor recording a black background in darkness.

An approach that is based on the background noise being perceived by the imaging sensor might be valuable in scenarios with low levels of light, such as fluorescence imaging, as the light intensities in fluorescence imaging are generally lower than in reflectance imaging. Accordingly, the de-noising, or the comparison with the pixel-specific intensity values, might be performed (only) for raw image data of fluorescence images (i.e. images wherein the sensed lights is due to fluorescence of the object being recorded). In other words, the de-noising, or the comparison with the pixel-specific intensity values, might be omitted for raw image data of reflectance images (i.e. images wherein the sensed light is light that is reflected by the object being recorded).

The system is configured to perform filter pattern reconstruction using the de-noised raw image data to obtain reconstructed image data. The de-noising of the raw image data is performed before the filter pattern reconstruction. The filter pattern reconstruction may be performed according to the filter pattern that was used to record the raw image data. For example, if the filter pattern is a Bayer pattern, the system may be configured to perform Bayer reconstruction using the de-noised raw image data. With other filter patterns, the respective reconstruction algorithms may be used. An example is given for Bayer pattern reconstruction with reference to Fig. 3.

The interface 112 may correspond to one or more inputs and/or outputs for receiving and/or transmitting information, which may be in digital (bit) values according to a specified code, within a module, between modules or between modules of different entities. For example, the interface 112 may comprise interface circuitry configured to receive and/or transmit information. In embodiments the one or more processors 114 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. In at least some embodiments, the one or more storage devices 116 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

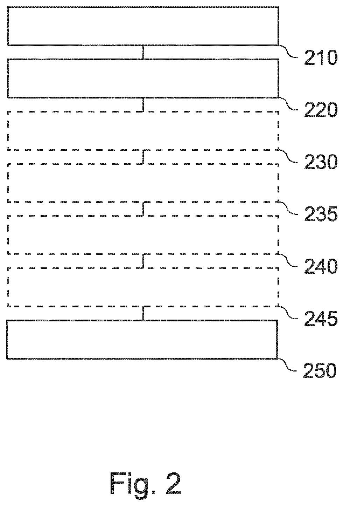

More details and aspects of the system and microscope system are mentioned in connection with the proposed concept or one or more examples described above or below (e.g. Fig. 2 to 4). The system or microscope system may comprise one or more additional optional features corresponding to one or more aspects of the proposed concept or one or more examples described above or below.

Fig. 2 shows a flow chart of a (corresponding) method for processing raw image data of a microscope. For example, the microscope may be implemented similar to the microscope of Fig. 1b. The method comprises obtaining 210 the raw image data from an optical imaging sensor of the microscope. The raw image data is based on a filter pattern of the optical imaging sensor. The method comprises performing 220 de-noising of the raw image data to obtain de-noised raw image data. The method comprises performing 250 filter pattern reconstruction using the de-noised raw image data to obtain reconstructed image data.

As indicated above, features described in connection with the system 110 and the microscope system 100 of Figs. 1a and/or 1b may be likewise applied to the method of Fig. 2.

In particular, as further shown in Fig. 2, the method may optionally comprise calculating 230 a median or average value of the intensity of the light represented by the pixel and the intensity of light of one or more adjacent pixels representing light in the same wavelength band as the pixel, and using 235 the median/average value for the corresponding pixel of the de-noised raw image data. The method may comprise comparing 240 the intensity value of a pixel of the plurality of pixels to a pixel-specific intensity threshold, and adapting 245 the intensity value of the pixel if the intensity is at most the pixel-specific threshold.

More details and aspects of the method are mentioned in connection with the proposed concept or one or more examples described above or below (e.g. Fig. 1a to 1b, 3 to 4). The method may comprise one or more additional optional features corresponding to one or more aspects of the proposed concept or one or more examples described above or below.

Embodiments of the present disclosure provide a system, method and computer program for improving a noise to signal ratio, i.e. for image denoising.

Embodiments may be based on applying two step denoising on image obtained by the camera.

The first step may compensate for a source of the noise in image acquisition by using a median filter. The median filter may be applied before image reconstruction is being done by the camera, directly on the RAW/filter pattern (e.g. the Bayer pattern). The optional second step addresses a specific source of the noise, originating from the optics inside the microscope.

Accordingly, a median filter may be applied for Bayer pattern images. The first step in the noise reduction uses a median filter. A median filter is typically used to eliminate salt and pepper type of noise, which can originate for example from analog to digital conversion or current leakage in digital cameras. The majority of digital cameras use a filter pattern, such as a Bayer pattern, in front of the sensor to reduce cost and size of the device with minimal impact to image quality. A Bayer pattern camera has one sensor hence three times less information than a three-sensor camera solution (dedicated sensors for red, green and blue wavelengths), but with special design of the pattern and dedicated reconstruction algorithms it can perform close to solutions with three dedicated sensors. Common path to achieve denoised image in case of camera with Bayer pattern is as follows: Obtain Filter Pattern (e.g. Bayer) image (e.g. the raw image data) → Apply reconstruction algorithm → Use median filter with RGB image.

A standard median filter might not be used directly on the Bayer pattern as neighboring pixels carry different type of information (red, green and blue, see Fig. 3). Fig. 3 shows an illustrative diagram of a (Bayer) filter pattern. In the illustrative diagram of Fig. 3, pixels 1, 3, 5, 11, 13, 15, 21, 23 and 25 sense light in a first wavelength band (e.g. red light), even-numbered pixels sense light in a second wavelength band (e.g. green light) and pixels 7, 9, 17 and 19 sense light in a third wavelength band (e.g. blue light). The reconstruction algorithm in this process may be based on an interpolation of the neighboring values. For example, using depicted simplified layout of the Bayer pattern sensor, to interpolate the red value in pixel number 9:

$$red_9 = \frac{red_3 + red_5 + red_{13} + red_{15}}{4}$$

This implies that in case any of the used red pixels carries noise, it might be used as an input to interpolate missing value and hence spread the noise in the reconstructed image, before applying the denoising step.

Embodiments may overcome this possible drawback by changing the chain to:
Obtain Filter Pattern (e.g. Bayer) image (e.g. the raw image data) → Use filter pattern specific (e.g. Bayer pattern specific) median filter (to de-noise the raw image data) → Apply reconstruction algorithm

Following the previous example, to reconstruct red value in pixel number 9, the pattern specific median filter may be applied first for (all of) the red input pixels (3, 5, 13 and 15). For the red pixel in the center (number 13), it may use values of red pixels 1, 3, 5, 11, 13, 15, 21, 23, 25 to eliminate possible noise from 13 and this new value may be used as input to the reconstruction algorithm (same applies to red input pixels 3, 5 and 15 with respective neighborhood). A filter pattern image (e.g. Bayer pattern image) that is denoised in such a manner may be used as input to the reconstruction algorithm.

In some embodiments, the method comprises dark frame suppression as an optional second step. For example, the next step in the denoising scheme may target a source of the noise specific to the optics and fluorescence camera in the microscope. In fluorescence imaging, signals that have a very high value for the user may be in the range of infra-red wavelength. A dedicated camera for capturing the light in the infrared wavelength range may be part of the microscope. It may be desirable to avoid unwanted sources of infra-red wavelength inside the optics. Due to optics carrier construction and heat generated by the operating camera, it may be possible to observe "background" noise caused by internal heat. To compensate for it, measurements of dark frames may be taken. With switched off light sources and totally covered optics the images from the digital camera (i.e. the optical imaging sensor) may be captured. In ideal conditions they may be perfectly black. As they typically are not, this information may be input to extract a value which indicates a dark frame noise level (e.g. an optical imaging sensor-specific pattern of noise). The calculated value (e.g. the optical imaging sensor-specific pattern of noise) may be used as suppression value in the imaging pipeline for fluorescence images to remove background information from the signal.

$$y(x) = \begin{cases} x, x > suppressionValue \\ 0, x \leq suppressionValue \end{cases}$$

In other words, the intensity values of the respective pixel may be compared to the suppression value of the respective pixel, and the intensity value may be adapted (e.g. discarded / suppressed) if the intensity value is at most the suppression value.

In some embodiments, the steps may be performed in a different order, e.g. the second step may be performed after the first step, or the two steps may be performed intertwined or in a combined manner, e.g. in a single operation.

In the following, a practical example is given on how the proposed concept can be used to avoid noise artefacts that stem from noise in different wavelength bands. A benefit of applying denoising before fluorescence extraction may be based on the fact that any noise that will fall through to fluorescence extraction can potentially introduce a false fluorescence signal or suppress an existing one. With the proposed approach, it may be emphasized that only one specific color may be expected (and processed) in fluorescence imaging, and any deviation from RGB values encoding may be treated as noise whilst in white light (i.e. reflectance) imaging mode any deviation from RGB may be treated as a different, but still valid color.

For sake of simplicity, the following example is given for optical properties of the fluorescence image path for fluorescence imaging in the wavelength band around 780 nm. Fig. 3b shows the sensor's spectral response, for blue pixels 310, green pixels 320 and red pixel 330, with depicted filtering out of wavelengths outside the signal component 340 comprising the fluorescence emissions. It can be seen that any signal that is expected to be used for fluorescence emissions in the wavelength bands follows some RGB curves properties. The requirement of fulfilling these properties is captured by the fluorescence extraction equation. Final fluorescence value of the fluorescence imaging signal is a linear combination of red, green and blue values: Value = -0.7644 * B + 0.8716 * G + 3.5291 * R, for example, where R, G, B refer to red, green and blue channel value from the Bayer pattern sensor chip. As Bayer pattern sensor does not have exact RGB values for each pixel, it uses neighboring values to determine the final fluorescence. Now what if any of the value in neighborhood is noisy?

In the following example, a constant measurement over the entire sensor area with one noisy pixel in the center (40) is assumed. In the following, red pixels are represented by squares with an upward-facing line pattern, green pixels are represented by squares with a downward-facing line pattern, and blue pixels are represented by squares with a dotted pattern. The noisy pixel in the center (40) is a red pixel. Fig. 3c shows the input pattern with noisy value (40) in the center (red pixel). The resulting value for entire area, using specified equation, without noisy pixel should equal 310 (assuming a linear interpolation approach for the de-bayering step). Fig. 3d shows the expected outcome.

In a common approach being used for de-noising of Bayer-pattern RGB images, the image may first be de-bayered, then the pixels may be extracted and a median filter may be applied. After de-bayering and extraction, the noisy pixel has an impact on neighborhood extraction, as shown in Fig. 3d. A median (3x3) filter cannot restore the expected outcome, as shown in Fig. 3f. It may be possible to perform the restoration with two-step median filtering or with median filtering using a bigger neighborhood, but these approaches have a substantially higher computational complexity.

In Figs. 3g and 3h, the effect of the proposed modified approach is shown. In the modified approach, the median filter is applied separately for each channel, then de-bayering is performed, and then extraction. Fig. 3g shows the color channel limited median filter output. Fig. 3h shows the values after de-bayering and extraction.

More details and aspects of the de-noising concept are mentioned in connection with the proposed concept or one or more examples described above or below (e.g. Fig. 1a to 2, 4). The concept may comprise one or more additional optional features corresponding to one or more aspects of the proposed concept or one or more examples described above or below.

Some embodiments relate to a microscope comprising a system as described in connection with one or more of the Figs. 1 to 3h. Alternatively, a microscope may be part of or connected to a system as described in connection with one or more of the Figs. 1 to 3h. Fig. 4 shows a schematic illustration of a (microscope) system 400 configured to perform a method described herein. The system 400 comprises a microscope 410 (e.g. the microscope 120 of Figs. 1a and/or 1b) and a computer system 420 (e.g. the system 110 of Figs. 1a and/or 1b). The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

**List of reference Signs**

| | |
|---|---|
| 100 | Microscope system |
| 105 | Base unit |
| 110 | System for processing raw image data of a microscope |
| 112 | Interface |
| 114 | Processor |
| 116 | Storage device |
| 120 | Microscope |
| 122 | Optical imaging sensor |
| 124 | Ocular displays |
| 126 | Auxiliary display |
| 130 | Auxiliary display |
| 140 | Arm |
| 150 | Steering handles |
| 210 | Obtaining raw image data |
| 220 | Performing de-noising |
| 230 | Calculating a median/average value |

| 235 | Using the median/average value |
|---|---|
| 240 | Comparing an intensity value |
| 245 | Adapting the intensity value |
| 250 | Performing filter pattern reconstruction |
| 310 | Blue |
| 320 | Green |
| 330 | Red |
| 340 | Spectral component of interest |
| 400 | System |
| 410 | Microscope |
| 420 | Computer system |

**Claims**

1. A system (110) for processing raw image data of a microscope (120), the system comprising one or more processors (114) and one or more storage devices (116), wherein the system is configured to:

   obtain the raw image data from an optical imaging sensor (122) of the microscope, the raw image data being based on a filter pattern of the optical imaging sensor;

   perform de-noising of the raw image data to obtain de-noised raw image data, wherein the raw image data is based on a plurality of pixels, the plurality of pixels representing light in two or more wavelength bands, such that the raw image data comprises, for each pixel, an intensity value representing an intensity of light in one of the two or more wavelength bands, wherein the de-noising is performed separately for at last one of the two or more wavelength bands based on the intensity values of the pixels of the respective wavelength band; and

   perform filter pattern reconstruction using the de-noised raw image data to obtain reconstructed image data.

2. The system according to claim 1, wherein the de-noising of the raw image data is performed before the filter pattern reconstruction.

3. The system according to one of the claims 1 to 2, wherein performing the de-noising comprises applying a median filter to de-noise the raw image data.

4. The system according to claim 3, wherein the raw image data is based on a plurality of pixels, the plurality of pixels representing light in two or more wavelength bands, such that the raw image data comprises, for each pixel, an intensity value representing an intensity of light in one of the two or more wavelength bands, wherein applying the median filter comprises, for each pixel of the plurality of pixels, calculating a median value of the intensity of the light represented by the pixel and the intensity of light of one or more adjacent pixels representing light in the same wavelength band as the pixel, and using the median value for a corresponding pixel of the de-noised raw image data.

5. The system according to one of the claims 1 to 4, wherein performing the de-noising comprises applying an averaging filter to de-noise the raw image data.

6. The system according to one of the claims 1 to 5, wherein the raw image data is based on a plurality of pixels, wherein the raw image data comprises, for each pixel, an intensity value representing an intensity of light, wherein performing the de-noising comprises comparing the intensity value of a pixel of the plurality of pixels to a pixel-specific intensity threshold, and adapting the intensity value of the pixel if the intensity is at most the pixel-specific threshold.

7. The system according to one of the claims 1 to 6, wherein the intensity value is compared after applying an averaging or median filter to de-noise the raw image data.

8. The system according to one of the claims 6 or 7, wherein the pixel-specific threshold is based on an optical imaging sensor-specific pattern of noise.

9. The system according to claim 8, wherein the optical imaging sensor-specific pattern of noise is a generic pattern that is suitable for optical imaging sensors of different microscopes of the same type of microscope.

10. The system according to claim 8, wherein the optical imaging sensor-specific pattern of noise is a pattern that is generated using the optical imaging sensor of the microscope,

    and/or wherein the optical imaging sensor-specific pattern of noise is a pattern that is generated during factory calibration of the optical imaging sensor.

11. The system according to claim 10, wherein the system is configured to generate the optical imaging sensor-specific pattern of noise using the optical imaging sensor.

12. The system according to one of the claims 1 to 11, wherein the de-noising is performed for raw image data of fluorescence images.

13. A method for processing raw image data of a microscope, the method comprising:

    obtaining (210) the raw image data from an optical imaging sensor of the microscope, the raw image data being based on a filter pattern of the optical imaging sensor;

performing (220) de-noising of the raw image data to obtain de-noised raw image data, wherein the raw image data is based on a plurality of pixels, the plurality of pixels representing light in two or more wavelength bands, such that the raw image data comprises, for each pixel, an intensity value representing an intensity of light in one of the two or more wavelength bands, wherein the de-noising is performed separately for at last one of the two or more wavelength bands based on the intensity values of the pixels of the respective wavelength band; and performing (250) filter pattern reconstruction using the de-noised raw image data to obtain reconstructed image data.

14. A computer program with a program code for performing the method according to claim 13 when the computer program is executed on a processor.

122
120

112
114
116
110

## Fig. 1a

130

140

124

110

105

126

120

150

100

## Fig. 1b

Fig. 2

Fig. 3a

Fig. 4

Fig. 3b

Fig. 3c

Fig. 3d

| 310 | 310 | 310 | 310 | 310 |
|-----|-----|-----|-----|-----|
| 310 | 246 | 187 | 246 | 310 |
| 310 | 187 | 64 | 187 | 310 |
| 310 | 246 | 187 | 246 | 310 |
| 310 | 310 | 310 | 310 | 310 |

Fig. 3e

| 310 | 310 | 310 | 310 | 310 |
|-----|-----|-----|-----|-----|
| 310 | 310 | 246 | 310 | 310 |
| 310 | 246 | 187 | 246 | 310 |
| 310 | 310 | 246 | 310 | 310 |
| 310 | 310 | 310 | 310 | 310 |

Fig. 3f

| | | | | |
|---|---|---|---|---|
| 80 | 40 | 80 | 40 | 80 |
| 40 | 7 | 40 | 7 | 40 |
| 80 | 40 | 80 | 40 | 15 |
| 40 | 7 | 40 | 7 | 40 |
| 80 | 40 | 80 | 40 | 80 |

Fig. 3g

| | | | | |
|---|---|---|---|---|
| 310 | 310 | 310 | 310 | 310 |
| 310 | 310 | 310 | 310 | 310 |
| 310 | 310 | 310 | 310 | 310 |
| 310 | 310 | 310 | 310 | 310 |
| 310 | 310 | 310 | 310 | 310 |

Fig. 3h